# EUROPÄISCHE PATENTSCHRIFT

(11) **EP 3 895 254 B1**
(45) Veröffentlichungstag und Bekanntmachung des Hinweises auf die Patenterteilung: **31.01.2024**
(21) Anmeldenummer: 19813497.5
(22) Anmeldetag: 02.12.2019
(51) Int. Cl.: H01R 13/04, H01R 24/60, H01R 13/502

(54) **STECKVERBINDERTEIL ZUR KONTAKTIERUNG IN MEHREREN RAUMRICHTUNGEN**
PLUG CONNECTOR PART FOR CONTACTING IN MULTIPLE SPATIAL DIRECTIONS
PIÈCE DE CONNECTEUR POUR LA MISE EN CONTACT DANS PLUSIEURS DIRECTIONS SPATIALES

(30) Priorität: 13.12.2018 DE 102018132142
(43) Veröffentlichungstag der Anmeldung: 20.10.2021
(73) Patentinhaber: Phoenix Contact GmbH & Co. KG, 32825 Blomberg (DE)
(72) Erfinder: BRAND, Fredrik, 32816 Schieder-Schwalenberg (DE); BEHLING, Bernd, 32839 Steinheim (DE)
(74) Vertreter: Meyer-Graefe, Karsten
(86) Internationale Anmeldenummer: PCT/EP2019/083242
(87) Internationale Veröffentlichungsnummer: WO 2020/120186

(56) Entgegenhaltungen:
- US-A- 4 655 522
- US-A1- 2008 153 318
- US-A1- 2017 047 682

## Beschreibung

Die Erfindung betrifft eine Steckverbinderanordnung, einen Steckverbinder mit einer solchen Steckverbinderanordnung und ein Verfahren zur Montage einer Steckverbinderanordnung.

Eine derartige Steckverbinderanordnung weist ein Steckverbinderteil zur elektrischen Verbindung mit einem Gegensteckverbinderteil auf, wobei das Steckverbinderteil ein Gehäuse und mehrere Kontakte umfasst, die derart am Gehäuse angeordnet sind, dass sie aus mehreren verschiedenen Steckrichtungen durch entsprechende Gegenkontakte des Gegensteckverbinderteils elektrisch kontaktierbar sind, wobei die Winkellage der Kontakte relativ zum Gehäuse fest ist. Derartige Steckverbinderteile sind beispielsweise aus der US 2008/153318 A1, der US 2017/047682 A1 und der US 4 655 522 A bekannt.

Steckverbinderteile werden in der Regel axial kontaktiert, insbesondere wenn eine feste Seite (Steckdose) und eine bewegliche Seite (Stecker) verwendet werden. Für eine Kontaktierung von zwei festen Seiten, zum Beispiel von Batteriemodulen untereinander oder in einem Rack, ist es der Anmelderin intern aus der Praxis bekannt, eine Kontaktierung über eine feste Montage mittels Stromschienen mit Schraubanschlüssen zu realisieren, auch hier Verbindungskabel mit Stecker und Steckdose zu verwenden oder die Module über zwei feste Steckverbinder frontal miteinander elektrisch zu verbinden. In diesen Fällen liegt eine große Herausforderung regelmäßig im Ausgleich von Toleranzen aufgrund von einem möglichen schiefen Stecken der Module zueinander in Bezug auf das Kontaktsystem, das nicht beschädigt werden soll.

Bei dem Einsatz von Batteriemodulen, aber auch im allgemeinen Kontext, ist es wünschenswert, möglichst flexibel einsetzbare Steckverbindungen zu ermöglichen, um das gleiche Steckverbinderteil in möglichst vielen unterschiedlichen Anwendungen einsetzen zu können.

Aus der DE 10 2014 102 555 B4 ist eine elektrische Einrichtung bekannt, die ein Steckkontaktelement mit einem Steckkontaktabschnitt umfasst, welches als lose in einem Isolierstoffgehäuse gelagerter Pendelkontakt ausgebildet ist, wobei der Steckkontaktabschnitt wenigstens zwei unterschiedliche Einsteckrichtungen aufweist. Durch die Bereitstellung von unterschiedlichen Einsteckrichtungen wird eine erhöhte Flexibilität beim Einsatz der elektrischen Einrichtung erzielt. Die aus der DE 10 2014 102 555 B4 bekannte Lösung ist allerdings für einige Anwendungen zu fragil.

In der US 8,246,357 B2 ist ein elektrischer Verbinder beschrieben, der einen ersten Hauptkörper und einen mit einem Gegensteckverbinderteil verbindbaren zweiten Hauptkörper umfasst, wobei der zweite Hauptkörper schwenkbar relativ zum ersten Hauptkörper ist. In Bezug auf den zweiten Hauptkörper ist die Steckrichtung eines Gegensteckverbinders also stets gleich. Auch diese Lösung ist aufgrund des Schwenkscharniers für einige Anwendungen zu fragil.

Aufgabe der vorliegenden Erfindung ist es, eine verbesserte Steckverbinderanordnung zur Verfügung zu stellen.

Diese Aufgabe wird durch einen Gegenstand mit den Merkmalen des Anspruchs 1 gelöst.

Demnach weist die Steckverbinderanordnung einen Winkeladapter auf, der derart am Gehäuse des Steckverbinderteils montierbar oder montiert ist, dass die Kontakte des Steckverbinderteils aus nur genau einer Steckrichtung durch die Gegenkontakte des Gegensteckverbinderteils elektrisch kontaktierbar sind.

Hiermit können unter Beibehaltung der Flexibilität der Anwendbarkeit des Steckverbinderteils zusätzliche Funktionen, wie etwa ein erhöhter Schutz gegen Feuchtigkeit und Schmutz ermöglicht werden. Der Winkeladapter umfasst z.B. zwei geschlossene Wände, die sich in einem Winkel von beispielsweise 90° zueinander erstrecken.

Durch die feste Winkellage der Kontakte relativ zum Gehäuse kann trotz der Bereitstellung mehrerer verschiedener Steckrichtungen eine besonders robuste Lagerung der Kontakte erzielt werden, was eine Verbesserung des Steckverbinderteils hinsichtlich eines flexiblen Einsatzes in besonders vielen Anwendungen ermöglicht. Zudem wird das Steckverbinderteil dahingehend verbessert, dass ein besonders einfacher Aufbau ermöglicht wird.

Eine feste Winkellage schließt eine vernachlässigbare Bewegbarkeit der Kontakte aufgrund von üblichen Herstellungstoleranzen mit ein. Alternativ ist eine völlig unbewegliche Anordnung der Kontakte am Gehäuse vorgesehen. In einer Ausgestaltung sind die Kontakte fest in das Gehäuse eingegossen.

Optional sind die Kontakte jeweils in Form eines Messerkontakts ausgebildet. Messerkontakte können sehr robust ausgebildet werden.

Das Gehäuse kann einen Kontakthalter umfassen, von dem die Kontakte, insbesondere in Form von Messerkontakten, derart vorstehen, dass sie wahlweise aus einer der mehreren verschiedenen Steckrichtungen durch die Gegenkontakte des Gegensteckverbinderteils elektrisch kontaktierbar sind. Auf diese Weise wird mit einem besonders einfachen Aufbau ein besonders flexibel einsetzbares Steckverbinderteil bereitgestellt.

Die Kontakte sind in einer Ausgestaltung derart am Gehäuse angeordnet, dass sie aus drei oder genau drei verschiedenen Steckrichtungen durch die Gegenkontakte des Gegensteckverbinderteils elektrisch kontaktierbar sind. Hierdurch kann die Flexibilität der Einsetzbarkeit nochmals erhöht werden.

Optional sind zwei der genau drei bereitgestellten Steckrichtungen antiparallel zueinander ausgerichtet. Alternativ oder zusätzlich ist die dritte der drei Steckrichtungen senkrecht zu den übrigen beiden ausgerichtet. Die drei Steckrichtungen entsprechen z.B. "von unten", "von vorn" und "von oben". So kann das Steckverbinderteil in besonders vielen Anwendungsfällen eingesetzt werden.

Die Steckrichtungen können vorherbestimmt sein, insbesondere sämtliche der möglichen Steckrichtungen. Dies ermöglicht eine besonders robuste Auslegung für diese Steckrichtungen.

Optional umfasst das Gehäuse einen Berührschutz, der die Kontakte zum Schutz gegen eine Berührung teilweise überdeckt. Der Berührschutz kann Öffnungen definieren, durch die hindurch die Kontakte aus den verschiedenen Steckrichtungen durch die Gegenkontakte des Gegensteckverbinderteils elektrisch kontaktierbar sind. Beispielsweise definiert der Berührschutz zumindest eine Öffnung für jede Steckrichtung. So wird eine flexible Einsetzbarkeit bei gleichzeitig hoher Sicherheit ermöglicht.

In einer Ausgestaltung ist das Gehäuse zur Montage an einer Wand ausgebildet, z.B. an einer Gehäusewand eines elektrischen Geräts.

In einer Weiterbildung ist der Winkeladapter wahlweise in einer von mehreren verschiedenen Ausrichtungen relativ zum Gehäuse am Gehäuse montierbar, wobei die Ausrichtung bestimmt, aus welcher Steckrichtung die Kontakte des Steckverbinderteils durch die Gegenkontakte des Gegensteckverbinderteils elektrisch kontaktierbar sind. Es wird somit nur ein Winkeladapter für mehrere verschiedene mögliche Steckrichtungen benötigt, was die Anzahl von Teilen gering hält.

Optional umfasst der Winkeladapter eine Dichtung. Die Dichtung kann so angeordnet sein, dass sie im montierten Zustand (des Winkeladapters am Gehäuse des Steckverbinderteils) den Winkeladapter gegenüber dem Gehäuse des Steckverbinderteils abdichtet, z.B. gegen Flüssigkeiten und/oder Schmutz.

In einer Ausgestaltung umfasst der Winkeladapter eine Führung für den Gegensteckverbinder. Hierdurch wird eine besonders sichere Kontaktierung ermöglicht. Die Führung eilt z.B. parallel zur entsprechenden Steckrichtung vor.

Gemäß einem Aspekt wird ein Steckverbinder bereitgestellt, der eine Steckverbinderanordnung und ein zu dem Steckverbinderteil der Steckverbinderanordnung passendes Gegensteckverbinderteil umfasst, wobei vorgesehen ist, dass die Steckverbinderanordnung wie vorstehend beschrieben, aus- und weitergebildet ist.

Das Gegensteckverbinderteil kann ein Gehäuse aufweisen, das mehrere alternative Befestigungsstellen für die Gegenkontakte bereitstellt, sodass die Gegenkontakte (insbesondere mittels eines Gegenkontakthalters) wahlweise an einer von mehreren Positionen relativ zum Gehäuse des Gegensteckverbinders daran montierbar sind. Dies kann eine weitere Variabilität bei der Anwendung ermöglichen. Insbesondere kann eine erste Position der Gegenkontakte am Gehäuse des Gegensteckverbinderteils eine Kontaktierung unter Verwendung des Winkeladapters ermöglichen und eine zweite Position eine Kontaktierung ohne Verwendung des Winkeladapters.

Das Gegensteckverbinderteil kann eine Dichtung umfassen, die im verbundenen Zustand des Steckverbinderteils mit dem Gegensteckverbinderteil das Gehäuse des Gegensteckverbinderteils gegenüber dem Gehäuse des Steckverbinderteils oder gegenüber dem optional am Gehäuse des Steckverbinderteils montierten Winkeladapter abdichtet.

Die eingangs beschriebene Aufgabe wird auch gelöst durch ein Verfahren zur Montage einer wie vorstehend beschriebenen, aus- und weitergebildeten Steckverbinderanordnung zur elektrischen Verbindung mit einem Gegensteckverbinderteil mit folgenden Schritten: Bereitstellen eines Gehäuses und mehrerer Kontakte, die derart am Gehäuse angeordnet sind, dass sie aus verschiedenen Steckrichtungen durch Gegenkontakte des Gegensteckverbinderteils elektrisch kontaktierbar sind, wobei die Winkellage der Kontakte relativ zum Gehäuse fest ist; Auswählen einer der verschiedenen Steckrichtungen; und elektrisches Kontaktieren der Kontakte mit den Gegenkontakten durch Stecken des Gegensteckverbinderteils an das Steckverbinderteil in der ausgewählten Steckrichtung.

Der der Erfindung zugrunde liegende Gedanke soll nachfolgend anhand der in den Figuren dargestellten Ausführungsbeispiele näher erläutert werden. Es zeigen:
- Fig. 1A bis 1D: Ansichten eines aus mehreren Steckrichtungen kontaktierbaren Steckverbinderteils zur elektrischen Verbindung mit einem Gegensteckverbinderteil;
- Fig. 2A bis 2D: Ansichten eines zum Steckverbinderteil gemäß Fig. 1A bis 1D passenden Gegensteckverbinderteils;
- Fig. 3A bis 3C: Ansichten des Steckverbinderteils gemäß Fig. 1A bis 1D und des Gegensteckverbinderteils gemäß Fig. 2A bis 2D beim Einstecken in einer ersten Steckrichtung;
- Fig. 4A bis 4C: Ansichten des Steckverbinderteils gemäß Fig. 1A bis 1D und des Gegensteckverbinderteils gemäß Fig. 2A bis 2D beim Einstecken in einer zweiten Steckrichtung;
- Fig. 5A und 5B: Ansichten des Steckverbinderteils gemäß Fig. 1A bis 1D und des Gegensteckverbinderteils gemäß Fig. 2A bis 2D beim Einstecken in einer dritten Steckrichtung;
- Fig. 6A und 6B: Ansichten des Steckverbinderteils gemäß Fig. 1A bis 1D und eines dazu passenden Gegensteckverbinderteils beim Einstecken in der dritten Steckrichtung;
- Fig. 7A bis 7C: Ansichten des Gegensteckverbinderteils gemäß Fig. 2A bis 2D mit einem Gehäuse und einem an einer ersten Position am Gehäuse montierten Gegenkontakthalter;
- Fig. 8A bis 8C: Ansichten des Gegensteckverbinderteils gemäß Fig. 2A bis 2D mit dem Gehäuse und dem an einer zweiten Position am Gehäuse montierten Gegenkontakthalter; und
- Fig. 9A bis 9C: Ansichten des Steckverbinderteils gemäß Fig. 1A bis 1D und eines Winkeladapters;

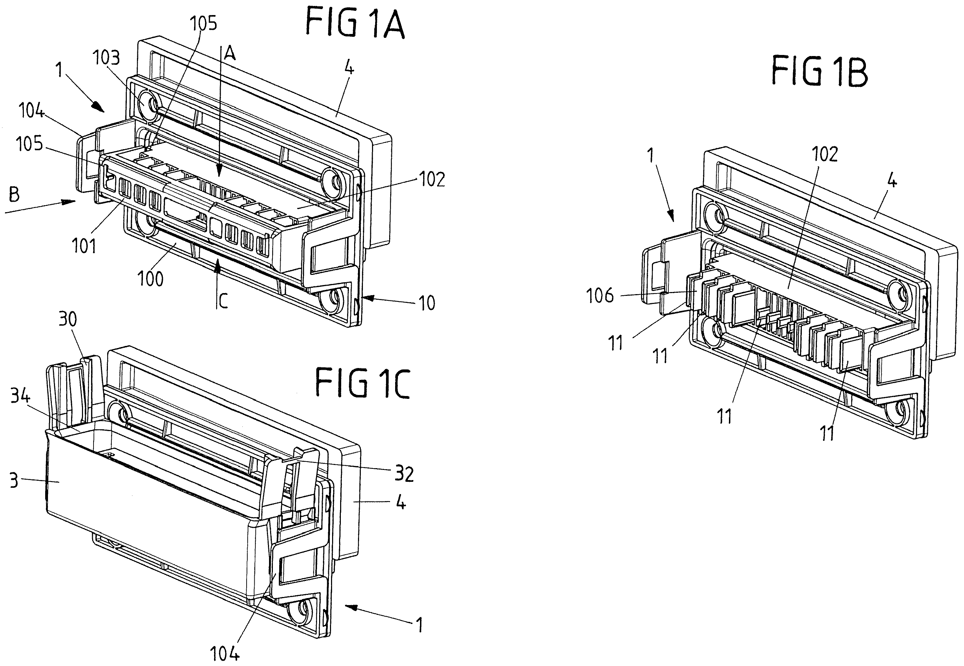

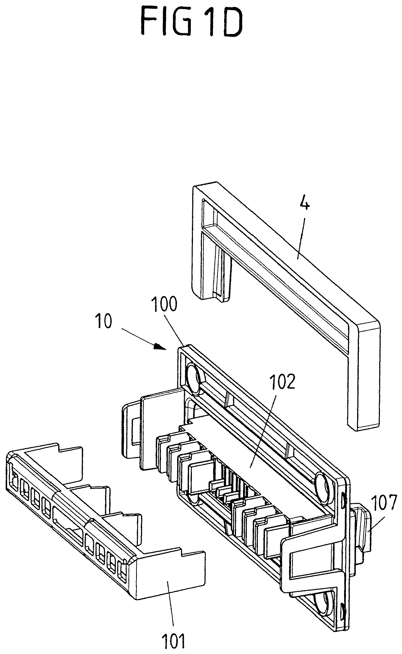

Fig. 1A bis 1D zeigen ein Steckverbinderteil 1 zur insbesondere wieder lösbaren elektrischen Verbindung mit einem Gegensteckverbinderteil.

Das Steckverbinderteil 1 umfasst ein Gehäuse 10 und mehrere Kontakte 11. Die Kontakte sind an einem Kontakthalter 102 des Gehäuses 10 befestigt. Ihre Winkellage relativ zum Gehäuse 10 ist fest. Vorliegend bilden der Kontakthalter 102 und die Kontakte eine Kontaktleiste mit einer Vielzahl von Kontakten 11, die im gezeigten Beispiel zum Teil unterschiedlich ausgebildet sind, alternativ dazu gleich ausgebildet sein können. Die Kontakte 11 sind in Form von Messerkontakten ausgebildet, siehe insbesondere Fig. 1B. Die Kontakte 11 sind jeweils in Form einer ebenen Platte ausgebildet.

Die Kontakte 11 sind derart am Gehäuse 10 angeordnet, dass sie (aus Sicht des Steckverbinderteils 1) aus mehreren, konkret genau drei verschiedenen Steckrichtungen A, B, C durch entsprechende Gegenkontakte eines passenden Gegensteckverbinders elektrisch kontaktierbar sind, siehe insbesondere Fig. 1A. Hierzu eilen die Kontakte 11 derart am Gehäuse 10 (konkret am Kontakthalter 102) vor, dass sie durch entsprechende Gegenkontakte, die aus einer beliebigen der drei Steckrichtungen A, B, C angenähert werden, berührbar sind, um einen sicheren elektrischen Kontakt herzustellen.

Um die einzelnen Kontakte 11 sicher voneinander zu separieren, ist zwischen jeweils zwei benachbarten Kontakten 11 ein Trennstück 106 angeordnet. Die Trennstücke 106 können einstückig mit dem Kontakthalter 102 ausgebildet sein.

Das Gehäuse 10 umfasst einen Grundkörper 100. Der Kontakthalter 102 ist einstückig mit dem Grundkörper 100 ausgebildet, alternativ daran montiert. Der Grundkörper 100 umfasst mehrere, hier vier Befestigungsstellen 103, im gezeigten Beispiel in Form von Löchern für Schraub- oder Nietverbindungen. Mittels der Befestigungsstellen 103 kann die Grundplatte 100 an einer Gehäusewand eines elektrischen oder elektronischen Geräts befestigt werden. Fig. 1A bis 1D zeigen ferner einen optionalen Montageadapter 4, welcher über Führungen 107 an der Grundplatte 100 daran gesteckt werden kann, z.B. zur Vorpositionierung oder als alternatives Befestigungsmittel zur Befestigung z.B. an einer Gehäusewand.

Von den drei Steckrichtungen A, B, C sind zwei Steckrichtungen A, C antiparallel zueinander, die dritte Steckrichtung B verläuft senkrecht zu den beiden anderen Steckrichtungen A, C. Wird das Steckverbinderteil 1 derart an einer im Wesentlichen senkrechten Wand montiert, dass die Kontakte 11 entlang der Horizontalen nebeneinander angeordnet sind, dann entsprechen die Steckrichtungen A, B, C einem Stecken "senkrecht nach unten" (Steckrichtung A), "waagrecht" (Steckrichtung B) und "senkrecht nach oben" (Steckrichtung C). Die Steckrichtung B verläuft parallel zu einer Längsachse der Kontakte 11. Die Steckrichtungen A und C verlaufen senkrecht dazu und senkrecht zu einer Geraden, auf der die einzelnen Kontakte 11 nebeneinander angeordnet sind.

Das Steckverbinderteil 1 umfasst ferner einen (optionalen) Berührschutz 101, hier in Form eines Käfigs. Der Berührschutz 101 definiert Öffnungen für Gegenkontakte aus allen drei Steckrichtungen A, B, C. Für einen in der Steckrichtung B eingesteckten Gegensteckverbinder definiert der Berührschutz 101 allein die Öffnungen. Für die Steckrichtungen A und C definieren der Berührschutz 101 und die Trennstücke 106 gemeinsam die Öffnungen. Optional sind einige der Kontakte 11 Lastkontakte. Der Berührschutz 101 schützt vor einer Berührung der Kontakte 11, insbesondere vor einer Berührung der Lastkontakte.

Insbesondere durch die Anordnung dieser Öffnungen sind die drei Steckrichtungen A, B, C vorherbestimmt und es können nicht beliebige andere Steckrichtungen gewählt werden.

Wie insbesondere anhand von Fig. 1A zu erkennen, umfasst das Steckverbinderteil 1 Mittel zur Vorgabe einer bestimmten Orientierung des Gegensteckverbinders, hier in

Form mehrerer Freimachungen 105 an endseitigen Abschnitten des Kontakthalters 102 und des Berührungsschutzes 101. Diese wirken mit weiter unten noch näher beschriebenen Vorsprüngen am Gegensteckverbinderteil zusammen, um ein Falschstecken zu verhindern.

Fig. 1C zeigt ferner einen optionalen Winkeladapter 3. Der Winkeladapter 3 ist auf den Kontakthalter 102 mit den Kontakten 11 (und optional den Berührungsschutz 101) aufsteckbar, konkret in der Steckrichtung B. In der aufgesteckten Position ist der Winkeladapter 3 mittels vom Grundkörper 100 des Gehäuses 10 abstehenden Rastelementen 104 verrastet und so am Gehäuse 10 fixiert.

Der Winkelstecker 3 umfasst eine durchgehende, ebene Seitenwand und eine durchgehende, ebene Bodenwand, die im rechten Winkel zueinander stehen. In einer Ebene senkrecht zur Seitenwand und parallel zur Bodenwand definiert der Winkeladapter 3 eine Stecköffnung 34, durch die hindurch der Gegensteckverbinder einsteckbar ist, um die Kontakte 11 elektrisch zu kontaktieren. Durch Aufstecken des Winkelsteckers 3 werden somit die Öffnungen für die Gegenkontakte für die zwei nicht ausgewählten Steckrichtungen verdeckt.

Der Winkelstecker 3 umfasst ferner, hier an gegenüberliegenden längsseitigen Enden, Führungen 30 zum Führen des Gegensteckverbinderteils in eine sichere Verbindung mit dem Steckverbinderteil 1. An den Führungen 30 sind ferner Rastelemente 32 zum Verrasten mit dem Gegensteckverbinderteil in der eingesteckten Position ausgebildet.

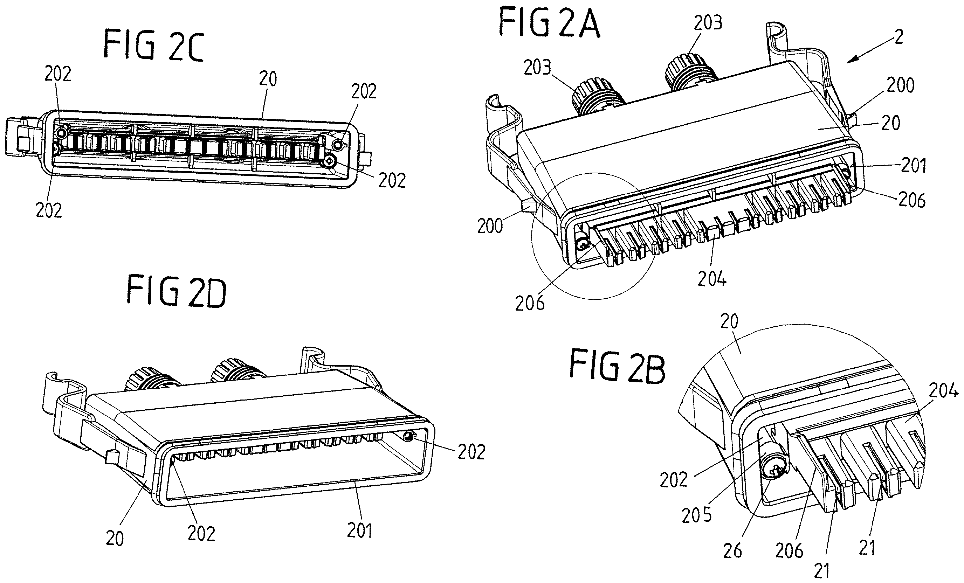

Die Fig. 2A bis 2D zeigen einen zum vorstehend beschriebenen Steckverbinderteil 1 passend ausgebildetes Gegensteckverbinderteil 2. Gemeinsam bilden das Steckverbinderteil 1 und das Gegensteckverbinderteil 2 einen Steckverbinder. Fig. 2B zeigt dabei einen in Fig. 2A dargestellten Ausschnitt in einer vergrößerten Ansicht. Die Figuren 2A und 2B einerseits und die Fig. 2C und 2D andererseits zeigen zwei verschiedene Konfigurationen des Gegensteckverbinderteils 2, welche nachstehend noch näher erläutert werden.

Das Gegensteckverbinderteil 2 umfasst ein Gehäuse 20 mit einem Gegenkontakthalter 204, an welchem mehrere Gegenkontakte 21 montiert sind. Die Gegenkontakte 21 sind jeweils dazu ausgebildet, einen Messerkontakt sicher zu kontaktieren, z.B. kraftschlüssig darauf gesteckt zu werden. Der Gegenkontakthalter 204 ist am übrigen Gehäuse 20 befestigt, hier mittels Schrauben 26, wobei auch andere Befestigungsmittel denkbar sind.

Hierzu sind an Wänden des Gehäuses 20 mehrere Sätze von Befestigungsstellen 202 ausgebildet, wobei der Gegenkontakthalter 204 wahlweise an einem oder einem anderen Satz der Befestigungsstellen 202 befestigt werden kann. Während in der Konfiguration gemäß Fig. 1A und 1B der Gegenkontakthalter 204 an einer Position nahe einer durch Wände des Gehäuses 20 definierten Öffnung 201 montiert ist, ist er in der Konfiguration gemäß Fig. 2C und 2D an einer Position zurückgesetzt in einem Innenraum mit Abstand zur Öffnung 201 montiert. Der Gegenkontakthalter 204 ist somit am übrigen Gehäuse 20 an zumindest zwei verschiedenen Positionen montierbar.

Das Gehäuse 20 umfasst ferner Rastelemente 200 in Form von Haken, welche mit den Rastelementen 104 des Gehäuses 10 des Steckverbinderteils 1 oder mit den Rastelementen 32 des Winkeladapters 3 verrastet werden können. Vorliegend sind die Rastelemente 200 an manuell betätigbaren Federelementen angeordnet, sodass eine eingerastete Verbindung lösbar ist.

An der den Gegenkontakten 21 abgewandten Seite umfasst der Gegensteckverbinder 2 einen oder mehrere, hier zwei Kabelauslässe 203. Das Gegensteckverbinderteil 2 ist ein bewegliches Teil und nicht an einer Gehäusewand oder dergleichen montiert.

Insbesondere in den Figuren 2A und 2B ist zu erkennen, dass benachbart zu äußeren Kontakten 21 des Gegensteckverbinderteils 2 jeweils ein Vorsprung 206 ausgebildet ist, welcher derart asymmetrisch ausgebildet ist, dass das Gegensteckverbinderteil 2 (in jeder Steckrichtung A, B, C) in nur einer vorgegebenen Orientierung einsteckbar ist, um Falschkontaktierungen zu vermeiden. Die Vorsprünge 206 bilden vorliegend jeweils eine Rippe aus.

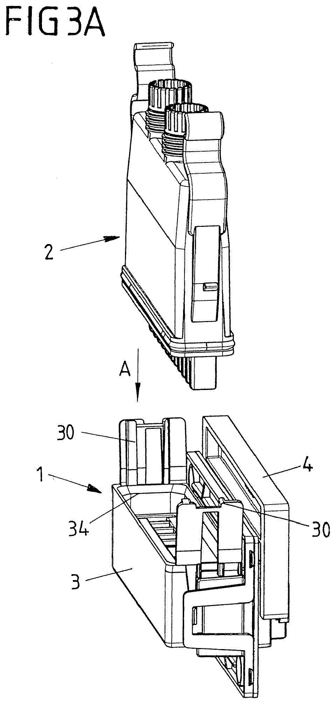

Die Fig. 3A bis 3C zeigen das Einstecken des Gegensteckverbinderteils 2 in das Steckverbinderteil 1 in der Steckrichtung A. Hierzu ist der Winkeladapter 3 so am Gehäuse 10 des Steckverbinderteils 1 montiert worden, dass von den drei vorbestimmten Steckrichtungen A, B, C nur noch eine, die Steckrichtung A, verfügbar ist.

Bei dieser Steckrichtung A wird der Gegenkontakthalter 204 so montiert, dass die Gegenkontakte 21 aus dem übrigen Gehäuse 20 (hier einer Tülle des Gegensteckverbinderteils 2) vorstehen, insbesondere nicht oder nicht vollständig im durch die Öffnung 201 des Gehäuses 20 begrenzten Innenraum angeordnet sind. Bei dem Einstecken des Gegensteckverbinderteils 2 wird das Gegensteckverbinderteil 2 an den Führungen 30 des Winkeladapters 3 geführt. Das Gegensteckverbinderteil 2 wird dabei in eine durch den Winkeladapter 3 definierte Stecköffnung 34 eingesteckt. Dabei nimmt der Winkeladapter 3 einen Teil des Gegensteckverbinderteils 2 auf.

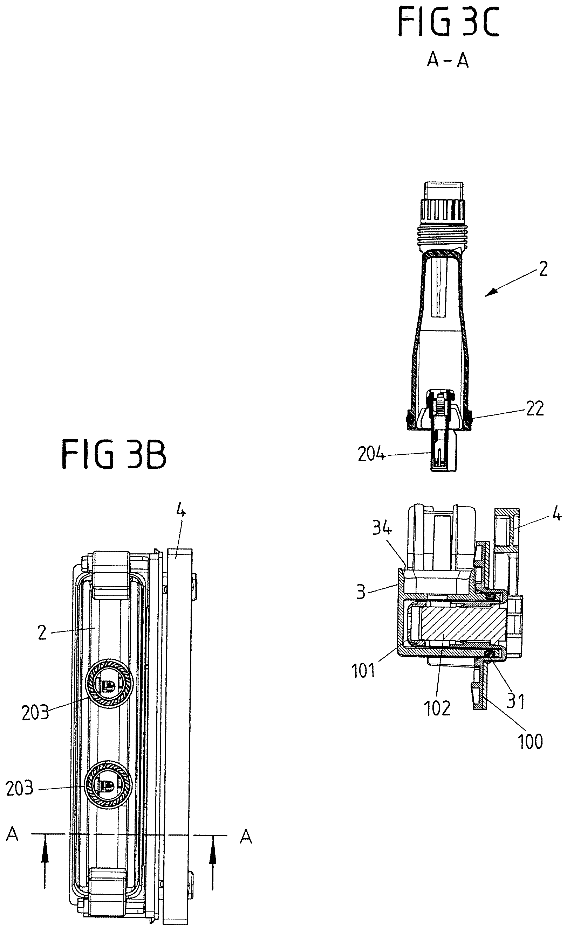

Insbesondere anhand von Fig. 3C, welche einen Querschnitt durch die in Fig. 3B eingezeichnete Ebene A-A darstellt, ist zu erkennen, dass der Winkeladapter 3 über den Kontakthalter 102 mit den Kontakten 11 gesteckt ist und mit einer Dichtung 31, vorliegend in Form einer umlaufenden Dichtung, gegen das Gehäuse 10 flüssig- und staubdicht abgedichtet ist.

Der Winkeladapter 3 ist nicht zwingend erforderlich, kann aber die Führung beim Einstecken verbessern und die Abdichtung bereitstellen. Gemeinsam mit dem Steckverbinderteil 1 bildet der Winkeladapter 3 eine Anordnung oder ein Set.

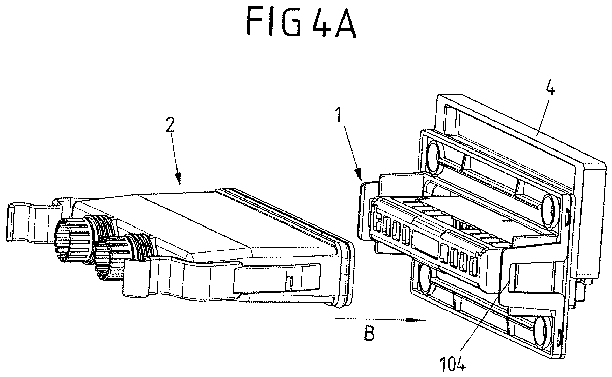

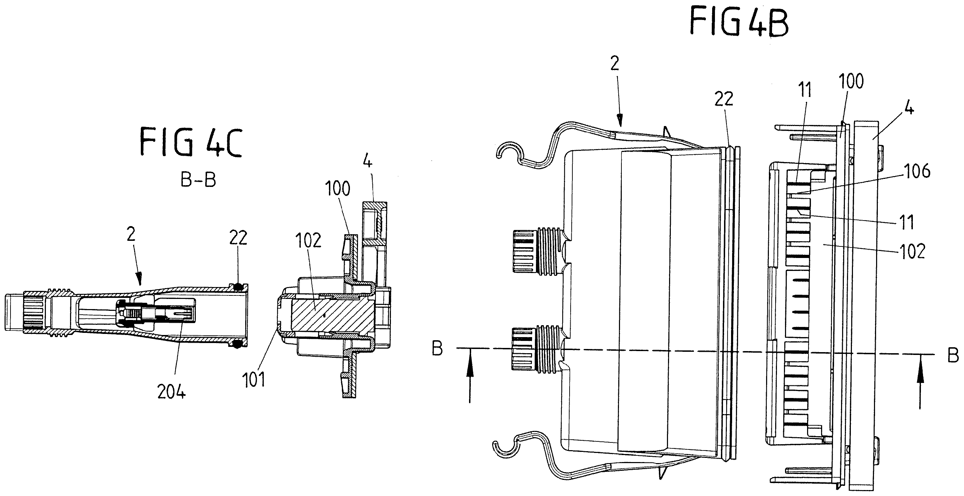

Fig. 4A bis 4C zeigen das Einstecken des Gegensteckverbinderteils 2 in das Steckverbinderteil 1 in der Steckrichtung B. Bei dieser Steckrichtung B wird der Winkeladapter 3 nicht verwendet, sondern das Gegensteckverbinderteil 2 wird direkt auf den Kontakthalter 102 mit den Kontakten 11 (und den darüber gesteckten Berührschutz 101) gesteckt und mit den Rastelementen 104 des Gehäuses 10 verrastet.

Für diese Steckrichtung B wird der Gegenkontakthalter 204 so montiert, dass die Gegenkontakte 21 vollständig im durch die Öffnung 201 des Gehäuses 20 begrenzten Innenraum angeordnet sind, siehe insbesondere Fig. 4C. Eine außen umlaufende Dichtung 22 des Gegensteckverbinderteils 2 dichtet das Gehäuse 20 des Gegensteckverbinderteils 2 gegenüber dem Gehäuse 10 des Steckverbinderteils 1 ab.

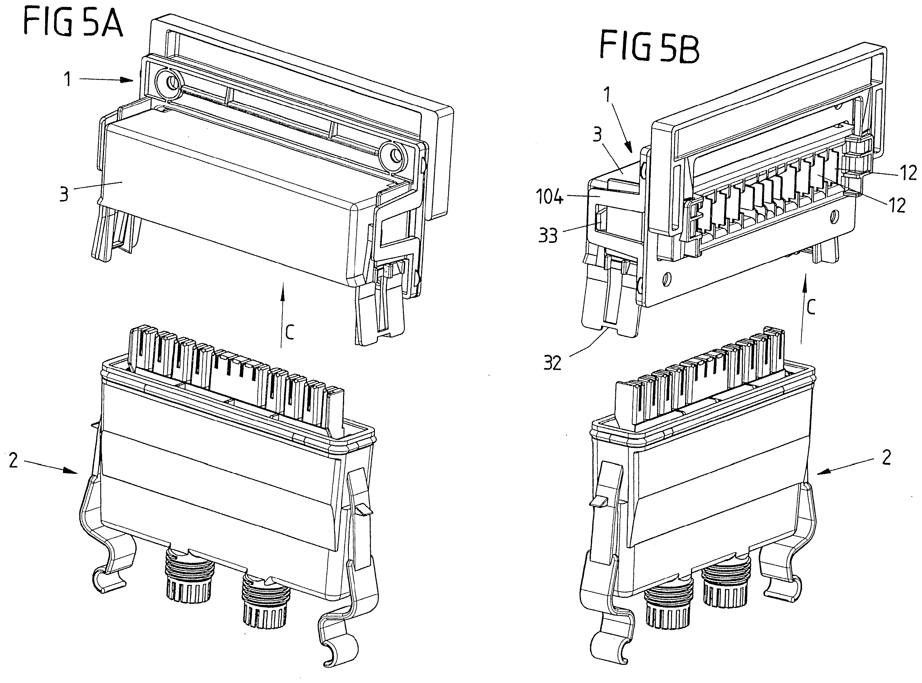

Fig. 5A und 5B zeigen das Einstecken des Gegensteckverbinderteils 2 in das Steckverbinderteil 1 in der Steckrichtung C. Hierzu ist der Winkeladapter 3 so am Gehäuse 10 des Steckverbinderteils 1 montiert worden, dass von den drei vorbestimmten Steckrichtungen A, B, C nur noch eine, die Steckrichtung C, verfügbar ist. Konkret ist der Winkeladapter 3 im Vergleich zur Anordnung für die Steckrichtung A um 180° gedreht relativ zum Gehäuse 10 am Gehäuse 10 montiert. Die übrige Funktion entspricht im Wesentlichen dem Einstecken gemäß der Steckrichtung A.

Fig. 5B zeigt ferner eine Rückseite, z.B. Innenseite, des Steckverbinderteils 1 mit mehreren Innenkontakten 12.

Durch eine Montage des Winkeladapters 3 am Gehäuse 10 des Steckverbinderteils 1 ist somit eine der drei möglichen Steckrichtungen A, B, C vorgebbar. Ferner ist der Winkeladapter 3 dazu ausgebildet, das Gegensteckverbinderteil 2 am Steckverbinderteil 1 zu befestigen.

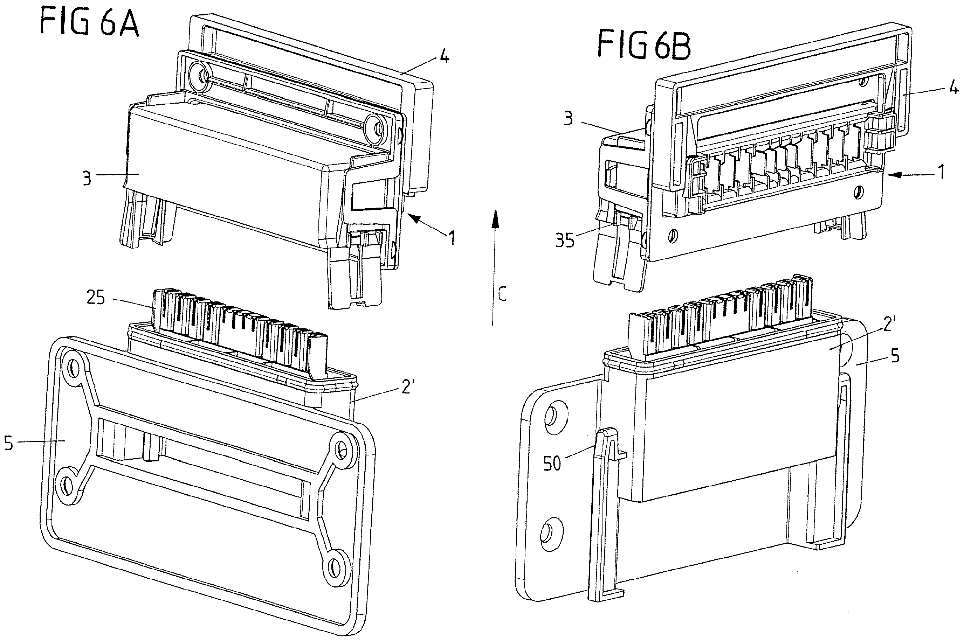

Fig. 6A und 6B zeigen den Steckverbinder 1 mit montiertem Winkeladapter 3 für die Steckrichtung C bei dem Zusammenstecken mit einem alternativ ausgebildeten Gegensteckverbinderteil 2`. Das Gegensteckverbinderteil 2` gemäß Fig. 6A und 6B umfasst eine zur Montage an einer Gehäusewand eines elektrischen oder elektronischen Geräts vorgesehene Wandplatte 5. Die elektrischen oder elektronischen Gehäuse mit dem Steckverbinderteil 1 und dem Gegensteckverbinderteil 2` werden derart relativ zueinander bewegt, dass aus Sicht des Steckverbinderteils 1 das Gegensteckverbinderteil 2' in Steckrichtung C eingesteckt wird.

Der Winkeladapter 3 umfasst an Außenseiten Führungen 35, die mit passenden Schienen 50 der Wandplatte 5 in Eingriff bringbar sind. Die Führungen 35 sind z.B. zur Bildung einer Nut-Feder-Führung ausgebildet. Alternativ sind die Führungen 35 zur Bildung einer Schwalbenschwanz-Führung geneigt. Hierdurch kann besonders viel Gewicht in der Führung aufgenommen werden.

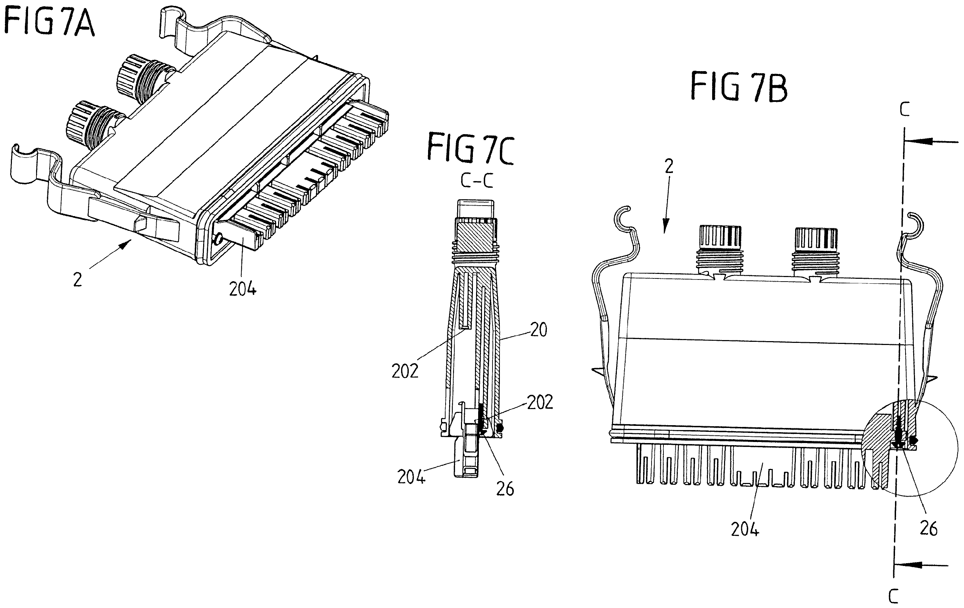

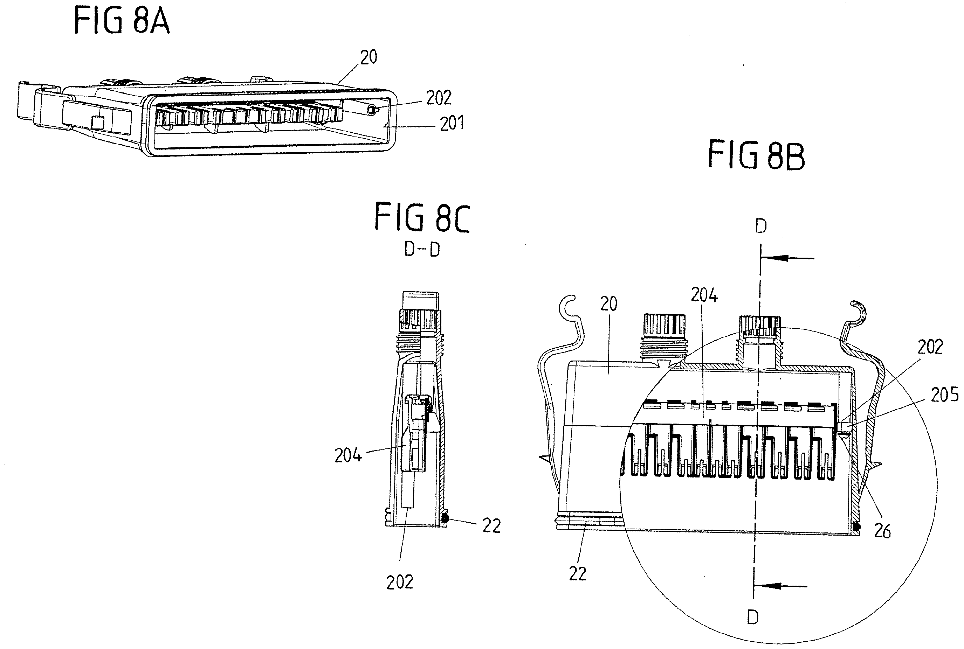

Die Fig. 7A bis 7C und 8A bis 8C zeigen die beiden Konfigurationen des Gegensteckverbinderteils 2 gemäß Fig. 2A bis 2D mit der vorstehenden Anordnung der Gegenkontakte 21 (für die senkrechten Steckrichtungen A, C, Fig. 7A bis 7C) und mit der eingezogenen Anordnung der Gegenkontakte 21 (für die waagrechte Steckrichtung B, siehe Fig. 8A bis 8C).

Insbesondere ist zu erkennen, dass das Gehäuse 20 des Gegensteckverbinderteils 2 unterschiedlich lange Schraubdome aufweist, welche an ihren offenen Enden jeweils die auswählbaren Befestigungsstellen 202 bereitstellen. Fig. 8A zeigt beispielsweise, dass bei der zurückgezogenen Konfiguration die längeren Schaubdome unbenutzt bleiben.

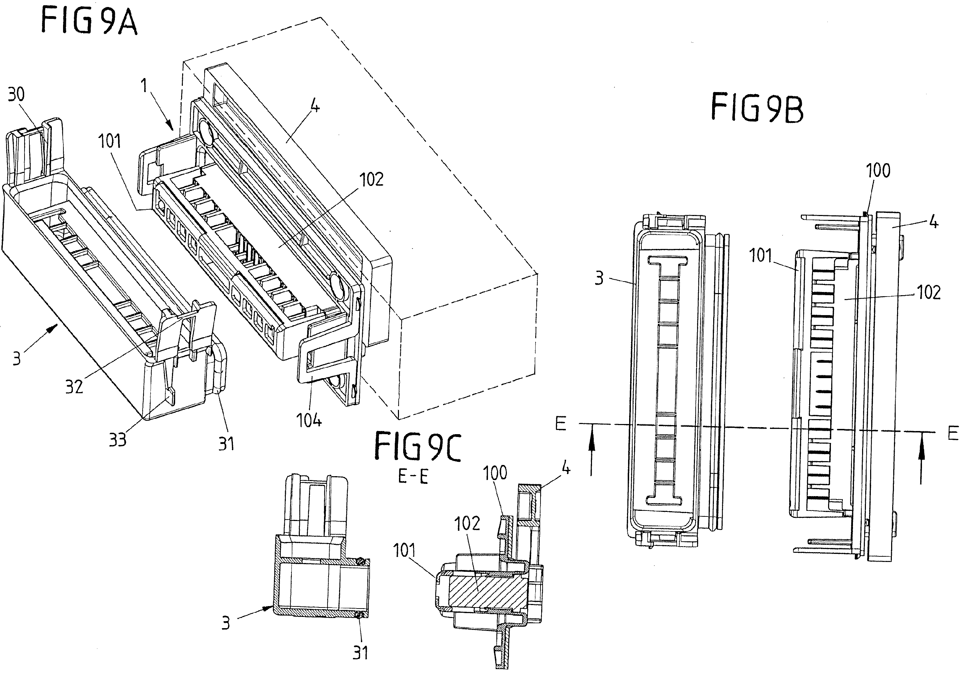

Fig. 9A bis 9C zeigen insbesondere den Winkeladapter 3 und dessen umlaufende Dichtung 31. Fig. 9C zeigt im Querschnitt, dass der Winkeladapter 3 in eine umlaufende Rille am Grundkörper des Gehäuses 10 einsteckbar ist, an welcher auch die Dichtung 31 dichtend in Anlage bringbar ist.

Insbesondere in Fig. 9A und 9B ist ferner zu erkennen, dass an den längsseitigen Enden des Winkeladapters 3 Rastelemente 33 in Form von Rastnasen vorgesehen sind, die mit den Rastelementen 204 des Gehäuses 10 rastend in Eingriff bringbar sind.

Ferner ist zu erkennen, dass die Führungen 30 des Winkeladapters 3 entgegen der jeweiligen Steckrichtung A, C vorstehen, sodass das Gegensteckverbinderteil 2, 2` in einen sicheren, elektrisch kontaktierenden Eingriff geführt wird. Die Führungen 30 umfassen jeweils zueinander parallele Führungswände.

Bei der Montage des Steckverbinderteils 1 zur elektrischen Verbindung mit dem Gegensteckverbinderteil 2; 2' wird somit wie folgt vorgegangen:
Zunächst wird das Steckverbinderteil 1 bereitgestellt (siehe insbesondere Fig. 1A).

Dann wird eine der verschiedenen Steckrichtungen A, B, C ausgewählt (siehe insbesondere Fig. 1A).

Optional wird dann der Winkeladapter 3 montiert (siehe insbesondere Fig. 9C und 1C).

Dann werden die Kontakte 11 mit den Gegenkontakten 21 durch Stecken des Gegensteckverbinderteils 2; 2` an das Steckverbinderteil 1 in der ausgewählten Steckrichtung A, B, C elektrisch kontaktiert (siehe insbesondere Fig. 3A bis 5B).

Das Steckverbinderteil 1 ist somit in drei Freiheitsgraden elektrisch kontaktierbar und ermöglicht so einen besonders flexiblen Einsatz. Das Steckverbinderteil 1 und das Gegensteckverbinderteil 2, 2' sind insbesondere zum Einsatz bei Batteriemodulen geeignet. Fig. 9A zeigt in gestrichelten Linien schematisch ein Batteriemodul. Gemäß einem Aspekt wird ein Batteriemodul mit dem Steckverbinderteil 1 bereitgestellt. Das Steckverbinderteil 1 ist z.B. an einer Seite des Batteriemoduls anordnet. Das Batteriemodul kann damit von oben, unten und der (Stirn-) Seite kontaktiert werden und kann damit besonders flexibel mit anderen Batteriemodulen elektrisch verbunden werden.

### Bezugszeichenliste

- 1: Steckverbinderteil
- 10: Gehäuse
- 100: Grundkörper
- 101: Berührschutz
- 102: Kontakthalter
- 103: Befestigungsstelle
- 104: Rastelement
- 105: Freimachung
- 106: Trennstück
- 107: Führung
- 11: Kontakt
- 12: Innenkontakt
- 2., 2': Gegensteckverbinderteil
- 20: Gehäuse
- 200: Rastelement
- 201: Öffnung
- 202: Befestigungsstelle
- 203: Kabelauslass
- 204: Gegenkontakthalter
- 205: Befestigungsstelle
- 206: Vorsprung
- 21: Gegenkontakt
- 22: Dichtung
- 26: Schraube
- 3: Winkeladapter
- 30: Führung
- 31: Dichtung
- 32: Rastelement
- 33: Rastelement
- 34: Stecköffnung
- 35: Führung
- 4: Montageadapter
- 5: Wandplatte
- 50: Schiene
- A, B, C: Steckrichtung

## Patentansprüche

1. Steckverbinderanordnung, mit einem Steckverbinderteil (1) zur elektrischen Verbindung mit einem Gegensteckverbinderteil (2; 2'), wobei das Steckverbinderteil (1) ein Gehäuse (10) und mehrere Kontakte (11) umfasst, die derart am Gehäuse (10) angeordnet sind, dass sie aus verschiedenen Steckrichtungen (A, B, C) durch Gegenkontakte (21) des Gegensteckverbinderteils (2; 2') elektrisch kontaktierbar sind, wobei die Winkellage der Kontakte (11) relativ zum Gehäuse (10) fest ist, und **gekennzeichnet durch** einen Winkeladapter (3), der derart am Gehäuse (10) des Steckverbinderteils (1) montierbar oder montiert ist, dass die Kontakte (11) des Steckverbinderteils (1) aus nur genau einer Steckrichtung (A, C) durch die Gegenkontakte (21) des Gegensteckverbinderteils (2; 2') elektrisch kontaktierbar sind.

2. Steckverbinderanordnung nach Anspruch 1, **dadurch gekennzeichnet, dass** der Winkeladapter (3) wahlweise in einer von mehreren verschiedenen Ausrichtungen relativ zum Gehäuse (10) am Gehäuse (10) montierbar ist, wobei die Ausrichtung bestimmt, aus welcher Steckrichtung (A, C) die Kontakte (11) des Steckverbinderteils (1) durch die Gegenkontakte (21) des Gegensteckverbinderteils (2; 2') elektrisch kontaktierbar sind.

3. Steckverbinderanordnung nach Anspruch 1 oder 2, **dadurch gekennzeichnet, dass** der Winkeladapter (3) eine Dichtung (31) umfasst, welche im montierten Zustand den Winkeladapter (3) gegenüber dem Gehäuse (10) des Steckverbinderteils (1) abdichtet.

4. Steckverbinderanordnung nach einem der Ansprüche 1 bis 3, **dadurch gekennzeichnet, dass** der Winkeladapter (3) eine Führung (30; 35) für den Gegensteckverbinder (2; 2') umfasst.

5. Steckverbinderanordnung nach einem der Ansprüche 1 bis 4, **dadurch gekennzeichnet, dass** die Kontakte (11) jeweils in Form eines Messerkontakts ausgebildet sind.

6. Steckverbinderanordnung nach einem der Ansprüche 1 bis 5, **dadurch gekennzeichnet, dass** das Gehäuse (10) einen Kontakthalter (102) umfasst, von dem die Kontakte (11) derart vorstehen, dass sie aus den verschiedenen Steckrichtungen (A, B, C) durch die Gegenkontakte (21) des Gegensteckverbinderteils (2; 2') elektrisch kontaktierbar sind.

7. Steckverbinderanordnung nach einem der vorangehenden Ansprüche, **dadurch gekennzeichnet, dass** die Steckrichtungen (A, B, C) vorherbestimmt sind.

8. Steckverbinderanordnung nach einem der vorangehenden Ansprüche, **dadurch gekennzeichnet, dass** das Gehäuse (10) einen Berührschutz (101) umfasst, der die Kontakte (11) zum Schutz gegen eine Berührung teilweise überdeckt und Öffnungen zumindest teilweise definiert, durch die hindurch die Kontakte (11) aus den verschiedenen Steckrichtungen (A, B, C) durch die Gegenkontakte (21) des Gegensteckverbinderteils (2; 2') elektrisch kontaktierbar sind.

9. Steckverbinderanordnung nach einem der vorangehenden Ansprüche, **dadurch gekennzeichnet, dass** das Gehäuse (10) zur Montage an einer Wand ausgebildet ist.

10. Steckverbinder mit einer Steckverbinderanordnung und einem zu dem Steckverbinderteil (1) der Steckverbinderanordnung passenden Gegensteckverbinderteil (2; 2'), **dadurch gekennzeichnet, dass** die Steckverbinderanordnung nach einem der Ansprüche 1 bis 9 ausgebildet ist.

11. Steckverbinder nach Anspruch 10, **dadurch gekennzeichnet, dass** das Gegensteckverbinderteil (2; 2') ein Gehäuse (20) aufweist, das mehrere alternative Befestigungsstellen (202) für die Gegenkontakte (21) bereitstellt, sodass die Gegenkontakte (21) wahlweise an einer von mehreren Positionen relativ zum Gehäuse (20) des Gegensteckverbinders (2; 2') daran montierbar oder montiert sind.

12. Steckverbinder nach einem der Ansprüche 10 oder 11, **dadurch gekennzeichnet, dass** das Gegensteckverbinderteil (2; 2') eine Dichtung (22) umfasst, die im verbundenen Zustand des Steckverbinderteils (1) mit dem Gegensteckverbinderteil (2; 2') das Gehäuse (20) des Gegensteckverbinderteils (2; 2') gegenüber dem Gehäuse (10) des Steckverbinderteils (1) oder gegenüber einem am Gehäuse (10) des Steckverbinderteils (1) montierten Winkeladapter (3) abdichtet.

13. Verfahren zur Montage einer nach einem der Ansprüche 1 bis 9 ausgebildeten Steckverbinderanordnung zur elektrischen Verbindung mit einem Gegensteckverbinderteil (2; 2') mit folgenden Schritten:
- Bereitstellen eines Gehäuses (12) und mehrerer Kontakte (11), die derart am Gehäuse (10) angeordnet sind, dass sie aus verschiedenen Steckrichtungen (A, B, C) durch Gegenkontakte (21) des Gegensteckverbinderteils (2; 2') elektrisch kontaktierbar sind, wobei die Winkellage der Kontakte (11) relativ zum Gehäuse (10) fest ist;
- Auswählen einer der verschiedenen Steckrichtungen (A, B, C); und
- elektrisches Kontaktieren der Kontakte (11) mit den Gegenkontakten (21) durch Stecken des Gegensteckverbinderteils (2; 2') an das Steckverbinderteil (1) in der ausgewählten Steckrichtung (A, B, C).

## Claims

1. Plug-in connector arrangement, with a plug-in connector part (1) for electrical connection to a mating plug-in connector part (2; 2'), wherein the plug-in connector part (1) comprises a housing (10) and a plurality of contacts (11) which are arranged on the housing (10) in such a manner that they are electrically contactable by mating contacts (21) of the mating plug-in connector part (2; 2') from different plug-in directions (A, B, C), wherein the angular position of the contacts (11) relative to the housing (10) is fixed, and **characterized by** an angle adapter (3) which can be mounted or is mounted on the housing (10) of the plug-in connector part (1) in such a manner that the contacts (11) of the plug-in connector part (1) are electrically contactable by the mating contacts (21) of the mating plug-in connector part (2; 2') from only precisely one plug-in direction (A, C).

2. Plug-in connector arrangement according to Claim 1, **characterized in that** the angle adapter (3) can be mounted on the housing (10) optionally in one of a plurality of different orientations relative to the housing (10), wherein the orientation determines from which plug-in direction (A, C) the contacts (11) of the plug-in connector part (1) are electrically contactable by the mating contacts (21) of the mating plug-in connector part (2; 2').

3. Plug-in connector arrangement according to Claim 1 or 2, **characterized in that** the angle adapter (3) comprises a seal (31) which, in the mounted state, seals the angle adapter (3) in relation to the housing (10) of the plug-in connector part (1).

4. Plug-in connector arrangement according to one of Claims 1 to 3, **characterized in that** the angle adapter (3) comprises a guide (30; 35) for the mating plug-in connector (2; 2').

5. Plug-in connector arrangement according to one of Claims 1 to 4, **characterized in that** the contacts (11) are each in the form of a blade contact.

6. Plug-in connector arrangement according to one of Claims 1 to 5, **characterized in that** the housing (10) comprises a contact holder (102) from which the contacts (11) protrude in such a manner that they are electrically contactable by the mating contacts (21) of the mating plug-in connector part (2; 2') from the different plug-in directions (A, B, C).

7. Plug-in connector arrangement according to one of the preceding claims, **characterized in that** the plug-in directions (A, B, C) are predetermined.

8. Plug-in connector arrangement according to one of the preceding claims, **characterized in that** the housing (10) comprises a contact protector (101) which partially overlaps the contacts (11) to protect them against contact and at least partially defines openings through which the contacts (11) are electrically contactable by the mating contacts (21) of the mating plug-in connector part (2; 2') from the different plug-in directions (A, B, C).

9. Plug-in connector arrangement according to one of the preceding claims, **characterized in that** the housing (10) is designed for mounting on a wall.

10. Plug-in connector with a plug-in connector arrangement and a mating plug-in connector part (2; 2) suitable for the plug-in connector part (1) of the plug-in connector arrangement, **characterized in that** the plug-in connector arrangement is designed according to one of Claims 1 to 9.

11. Plug-in connector according to Claim 10, **characterized in that** the mating plug-in connector part (2; 2') has a housing (20) which provides a plurality of alternative fastening points (202) for the mating contacts (21) such that the mating contacts (21) can be mounted or are mounted on the housing (20) of the mating plug-in connector (2; 2') optionally at one of a plurality of positions thereof.

12. Plug-in connector according to either of Claims 10 and 11, **characterized in that** the mating plug-in connector part (2; 2') comprises a seal (22) which, in the connected state of the plug-in connector part (1) with the mating plug-in connector part (2; 2'), seals the housing (20) of the mating plug-in connector part (2; 2') in relation to the housing (10) of the plug-in connector part (1) or in relation to an angle adapter (3) mounted on the housing (10) of the plug-in connector part (1).

13. Method for mounting a plug-in connector arrangement designed according to one of Claims 1 to 9 for electrical connection to a mating plug-in connector part (2; 2'), comprising the following steps:
- providing a housing (12) and a plurality of contacts (11) which are arranged on the housing (10) in such a manner that they are electrically contactable by mating contacts (21) of the mating plug-in connector part (2; 2') from different plug-in directions (A, B, C), wherein the angular position of the contacts (11) relative to the housing (10) is fixed;
- selecting one of the different plug-in directions (A, B, C); and
- electrically contacting the contacts (11) with the mating contacts (21) by plugging the mating plug-in connector part (2; 2') onto the plug-in connector part (1) in the selected plug-in direction (A, B, C).

## Revendications

1. Agencement de connecteur enfichable, comprenant une pièce de connecteur enfichable (1) servant à la connexion électrique avec une pièce de connecteur enfichable complémentaire (2 ; 2'), dans lequel la pièce de connecteur enfichable (1) comprend un boîtier (10) et plusieurs contacts (11) qui sont disposés sur le boîtier (10) de façon à pouvoir être mis en contact électrique à partir de différentes directions d'enfichage (A, B, C) par des contacts complémentaires (21) de la pièce de connecteur enfichable complémentaire (2 ; 2'), dans lequel la position angulaire des contacts (11) par rapport au boîtier (10) est fixe, et
**caractérisé par** un adaptateur d'angle (3) qui peut être monté ou est monté sur le boîtier (10) de la pièce de connecteur enfichable (1) de telle sorte que les contacts (11) de la pièce de connecteur enfichable (1) peuvent être mis en contact électrique uniquement à partir d'une seule direction d'enfichage (A, C) par les contacts complémentaires (21) de la pièce de connecteur enfichable complémentaire (2 ; 2').

2. Agencement de connecteur enfichable selon la revendication 1, **caractérisé en ce que** l'adaptateur d'angle (3) peut être monté sur le boîtier (10) au choix dans l'une de plusieurs orientations différentes par rapport au boîtier (10), dans lequel l'orientation détermine à partir de quelle direction d'enfichage (A, C) les contacts (11) de la pièce de connecteur enfichable (1) peuvent être mis en contact électrique par les contacts complémentaires (21) de la pièce de connecteur enfichable complémentaire (2 ; 2').

3. Agencement de connecteur enfichable selon la revendication 1 ou 2, **caractérisé en ce que** l'adaptateur d'angle (3) comprend un joint (31) qui, à l'état monté, assure l'étanchéité de l'adaptateur d'angle (3) par rapport au boîtier (10) de la pièce de connecteur enfichable (1).

4. Agencement de connecteur enfichable selon l'une quelconque des revendications 1 à 3, **caractérisé en ce que** l'adaptateur d'angle (3) comprend un guide (30 ; 35) pour le connecteur enfichable complémentaire (2 ; 2').

5. Agencement de connecteur enfichable selon l'une quelconque des revendications 1 à 4, **caractérisé en ce que** les contacts (11) sont respectivement réalisés sous la forme d'un contact à couteau.

6. Agencement de connecteur enfichable selon l'une quelconque des revendications 1 à 5, **caractérisé en ce que** le boîtier (10) comprend un support de contact (102) à partir duquel les contacts (11) font saillie de façon à pouvoir être mis en contact électrique à partir des différentes directions d'enfichage (A, B, C) par les contacts complémentaires (21) de la pièce de connecteur enfichable complémentaire (2 ; 2').

7. Agencement de connecteur enfichable selon l'une quelconque des revendications précédentes, **caractérisé en ce que** les directions d'enfichage (A, B, C) sont prédéterminées.

8. Agencement de connecteur enfichable selon l'une quelconque des revendications précédentes, **caractérisé en ce que** le boîtier (10) comprend une protection contre les contacts (101) qui recouvre partiellement les contacts (11) pour les protéger contre les contacts et définit au moins partiellement des ouvertures à travers lesquelles les contacts (11) peuvent être mis en contact électrique à partir des différentes directions d'enfichage (A, B, C) par les contacts complémentaires (21) de la pièce de connecteur enfichable complémentaire (2 ; 2').

9. Agencement de connecteur enfichable selon l'une quelconque des revendications précédentes, **caractérisé en ce que** le boîtier (10) est réalisé pour être monté sur un mur.

10. Connecteur enfichable, comprenant un agencement de connecteur enfichable et une pièce de connecteur enfichable complémentaire (2 ; 2') appariée à la pièce de connecteur enfichable (1) de l'agencement de connecteur enfichable, **caractérisé en ce que** l'agencement de connecteur enfichable est réalisé selon l'une quelconque des revendications 1 à 9.

11. Connecteur enfichable selon la revendication 10, **caractérisé en ce que** la pièce de connecteur enfichable complémentaire (2 ; 2') présente un boîtier (20) qui fournit plusieurs points de fixation (202) en variante pour les contacts complémentaires (21) de sorte que les contacts complémentaires (21) peuvent être montés ou sont montés au choix dans une de plusieurs positions par rapport au boîtier (20) du connecteur enfichable complémentaire (2 ; 2').

12. Connecteur enfichable selon l'une quelconque des revendications 10 ou 11, **caractérisé en ce que** la pièce de connecteur enfichable complémentaire (2 ; 2') comprend un joint (22) qui, à l'état connecté de la pièce de connecteur enfichable (1) à la pièce de connecteur enfichable complémentaire (2 ; 2'), assure l'étanchéité du boîtier (20) de la pièce de connecteur enfichable complémentaire (2 ; 2') par rapport au boîtier (10) de la pièce de connecteur enfichable (1) ou par rapport à un adaptateur d'angle (3) monté sur le boîtier (10) de la pièce de connecteur enfichable (1).

13. Procédé de montage d'un agencement de connecteur enfichable réalisé selon l'une quelconque des revendications 1 à 9 servant à la connexion électrique avec une pièce de connecteur enfichable complémentaire (2 ; 2'), comprenant les étapes suivantes consistant à :
- fournir un boîtier (12) et plusieurs contacts (11) qui sont disposés sur le boîtier (10) de telle sorte qu'ils peuvent être mis en contact électrique à partir de différentes directions d'enfichage (A, B, C) par des contacts complémentaires (21) de la pièce de connecteur enfichable complémentaire (2 ; 2'), dans lequel la position angulaire des contacts (11) par rapport au boîtier (10) est fixe ;
- sélectionner l'une des différentes directions d'enfichage (A, B, C) ; et
- mettre en contact électrique les contacts (11) avec les contacts complémentaires (21) par l'enfichage de la pièce de connecteur enfichable complémentaire (2 ; 2') avec la pièce de connecteur enfichable (1) dans la direction d'enfichage (A, B, C) sélectionnée.
